# EUROPÄISCHE PATENTSCHRIFT

(11) **EP 0 901 950 B1**
(45) Veröffentlichungstag und Bekanntmachung des Hinweises auf die Patenterteilung: **28.11.2001**
(21) Anmeldenummer: 98116833.9
(22) Anmeldetag: 07.09.1998
(51) Int. Cl.: B60T 13/66

(54) **Unterdruckbremskraftverstärker zur Einstellung eines Bremsdrucks in einer Hilfskraftbremsanlage**
Vacuum brake booster for setting of a brake pressure in a booster brake system
Servomoteur à dépression pour contrôler la pression de freinage d'un système de freinage assisté

(30) Priorität: 13.09.1997 DE 19741133
(43) Veröffentlichungstag der Anmeldung: 17.03.1999
(73) Patentinhaber: FTE automotive GmbH, 96106 Ebern (DE)
(72) Erfinder: Macht, Egid, 81247 München (DE); Hagel, Thomas, 96106 Ebern (DE); Witzgall, Herbert, Dipl.-Ing. (FH), 96106 Ebern (DE)
(74) Vertreter: Oppermann, Mark, Dipl.-Ing.

(56) Entgegenhaltungen:
- EP-A- 0 506 222
- DE-C- 4 028 290
- DE-C- 4 208 496
- DE-C- 4 234 041
- US-A- 3 747 473
- US-A- 4 179 980

## Beschreibung

Die Erfindung bezieht sich auf einen Unterdruck-Bremskraftverstärker gemäß dem Oberbegriff des Patentanspruchs 1. Insbesondere bezieht sich die Erfindung auf einen ansprechweglosen Unterdruck-Bremskraftverstärker für eine Hilfskraft-Bremsanlage in einem Kraftfahrzeug.

Bei einer Hilfskraft-Bremsanlage in einem Kraftfahrzeug geht die zur Erzeugung der Bremskraft benötigte Energie von mindestens einer Energieversorgungseinrichtung und - im Gegensatz zu einer Fremdkraft-Bremsanlage - der physischen Kraft des Fahrers des Kraftfahrzeugs aus. Zur Umsetzung dieser Energie bedient man sich im Stand der Technik (DE-A-34 24 410) vornehmlich eines zwischen Bremspedal und Hauptzylinder in einfacher oder Tandem-Bauweise geschalteten Unterdruck-Bremskraftverstärkers, der einen mit dem Hauptzylinder wirkverbundenen Arbeitskolben aufweist, welcher eine Unterdruckkammer von einer Arbeitskammer trennt. Der Unterdruck-Bremskraftverstärker hat ein mit dem Bremspedal wirkverbundenes Steuerventil, das wahlweise die Unterdruckkammer und die Arbeitskammer untereinander oder letztere mit der Umgebung verbindet. Die Unterdruckkammer ist bei Kraftfahrzeugen mit Ottomotor an das Saugrohr des Motors angeschlossen, bei Kraftfahrzeugen mit Dieselmotor wird der Unterdruck durch eine Vakuumpumpe erzeugt, die vom Motor direkt angetrieben ist.

Beim Betätigen der Bremsanlage im normalen Betrieb wird die Arbeitskammer über das Steuerventil mit der Umgebung verbunden, so daß Luft von atmosphärischem Druck in die Arbeitskammer einströmt und sich dort ein Mischdruck einstellt. Die über das Bremspedal auf den Hauptzylinder aufgebrachte Kraft verstärkt sich dabei um die durch den Druckunterschied in den Kammern entstehende Kraft, wobei der sich im Hauptzylinder infolge dieser Kraft aufgebaute Bremsdruck über ein Reaktionsglied im Unterdruck-Bremskraftverstärker als Reaktionskraft an das Bremspedal zurückgemeldet wird. Wird nun die auf das Bremspedal aufgebrachte Kraft kontinuierlich gesteigert, so erhöht sich der Mischdruck in der Arbeitskammer bis auf atmosphärischen Druck, bei dem die maximale Druckdifferenz zwischen den Kammern herrscht. Eine Erhöhung der Hilfskraft ist nicht mehr möglich, die Arbeitskraft des Unterdruck-Bremskraftverstärkers ist in diesem auch als Aussteuerpunkt des Unterdruck-Bremskraftverstärkers bezeichneten Zustand ausgeschöpft. Eine weitere Erhöhung des Bremsdrucks ist nur noch über eine Steigerung der auf das Bremspedal aufgebrachten Kraft möglich. Beim Zurücknehmen des Bremspedals wird die Luft atmosphärischen Drucks aus der Arbeitskammer über das Steuerventil und die Unterdruckkammer abgesaugt und der Arbeitskolben läuft unter Abbau des Bremsdrucks im Hauptzylinder in seine Ausgangsstellung zurück. Bei Ausfall des Unterdrucks wirkt die über das Bremspedal aufgebrachte Kraft alleine auf den Hauptzylinder.

Beim Einsatz derartiger Unterdruck-Bremskraftverstärker ist festgestellt worden, daß ein Großteil aller Fahrer selbst bei vermeintlichen Vollbremsungen nicht die volle Hilfskraftunterstützung des Unterdruck-Bremskraftverstärkers erzielen kann. Tests haben ergeben, daß die durch den Fahrer auf das Bremspedal aufgebrachte Kraft oftmals nicht ausreicht, den Unterdruck-Bremskraftverstärker bis zum Aussteuerpunkt anzusprechen, oder zu frühzeitig verringert wird, so daß der maximal verfügbare Hilfskraftanteil nicht ausgeschöpft wird. Selbst ein erneutes Nachsetzen auf das teilweise niedergetretene Bremspedal verbessert dann den Bremsvorgang nicht mehr. Im Ergebnis wird ein Teil des maximal möglichen Bremsdrucks nicht aufgebracht, so daß der bestmögliche Bremsweg nicht erzielt werden kann. Selbst ein Kraftfahrzeug mit einer Antiblockierregelung kann nicht optimal verzögert werden, wenn der Fahrer nicht entschlossen genug auf das Bremspedal tritt, wodurch sich der Bremsweg um etliche, oft entscheidende Meter verlängert.

In diesem Zusammenhang ist im Stand der Technik gemäß der DE-A-40 28 290 zur Verkürzung des Bremswegs vorgeschlagen worden, das Überschreiten eines ersten Schwellwerts durch die durch den Fahrer veranlaßte Betätigungsgeschwindigkeit des Bremspedals als einziges Kriterium für das Auslösen eines automatischen Bremsvorgangs zu verwenden, wobei unmittelbar nach dem Auslösen des automatischen Bremsvorgangs automatisch ein größerer als sich aus der jeweiligen Bremspedalstellung ergebender Bremsdruck aufgebaut wird, der jedoch durch die "dominante" Wirkung einer Antiblockierregelung entsprechend den jeweils herrschenden Straßenverhältnissen begrenzt wird.

Eine Vorrichtung zur Durchführung dieses Verfahrens, die einen zwischen Bremspedal und Hauptzylinder geschalteten, elektronisch geregelten Unterdruck-Bremskraftverstärker aufweist, ist beispielsweise aus der DE-A-42 08 496 bekannt. Bei dieser Vorrichtung wird aus einer fortlaufenden Überwachung der Stellung des Bremspedals über einen Stellungsgeber mittels einer mit dem Stellungsgeber elektrisch verbundenen Steuereinheit die Geschwindigkeit bestimmt, mit der der Fahrer das Bremspedal betätigt. Die ermittelte Geschwindigkeit wird von der Steuereinheit fortlaufend mit einem vorbestimmten Schwellenwert verglichen. Ist die ermittelte Geschwindigkeit größer als der Schwellenwert, woraus geschlossen werden kann, daß der Fahrer nicht lediglich eine wohldosierte Zielbremsung, sondern eine Vollbremsung durchzuführen beabsichtigt, wird von der Steuereinheit ein elektrisches Ausgangssignal erzeugt und an ein mit der Steuereinheit verbundenes, elektromagnetisch ansteuerbares Bremsdruck-Steuerventil angelegt, welches zusätzlich zu dem oben beschriebenen Steuerventil des Unterdruck-Bremskraftverstärkers vorgesehen und pneumatisch an diesen angeschlossen ist. Durch das von der Steuereinheit erzeugte Ausgangssignal wird das zusätzliche Bremsdruck-Steuerventil von einer Grundstellung, in der es auf die oben beschriebene Funktion des Steuerventils des Unterdruck-Bremskraftverstärkers keinen Einfluß hat, in eine Stellung geschaltet, in der unabhängig von der Stellung des Steuerventils des Unterdruck-Bremskraftverstärkers Luft atmosphärischen Drucks in die Arbeitskammer des Unterdruck-Bremskraftverstärkers eingekoppelt ist, während die Unterdruckkammer des Unterdruck-Bremskraftverstärkers gegenüber der Arbeitskammer abgeriegelt ist, wodurch der Unterdruck-Bremskraftverstärker zur Entfaltung seiner maximalen Hilfskraft automatisch angesteuert wird. Der so erzeugte Bremsdruck wird nun erforderlichenfalls mittels einer Antiblockierregelung derart begrenzt, daß ein dynamisch stabiles Verzögerungsverhalten des Kraftfahrzeugs gewährleistet bleibt.

Dieser Stand der Technik ist Ausgangspunkt weiterer Überlegungen (vergl. ATZ Automobiltechnische Zeitschrift 97 (1995) 1, Seiten 36 ff.), nach denen elektronisch geregelte Unterdruck-Bremskraftverstärker noch für weitere Funktionen eingesetzt werden sollen. Obgleich mit diesem Stand der Technik insgesamt der Bremsweg in kritischen Fahrsituationen deutlich verringert werden kann, besteht hier ein Nachteil dahingehend, als dazu zwangsläufig ein relativ großer vorrichtungstechnischer Aufwand betrieben werden muß, der derzeit einen breiten Einsatz dieser Technik in Kraftfahrzeugen aus Kostengründen verhindert.

Schließlich finden sich im Stand der Technik auch Vorschläge, gemäß denen bei Überschreitung einer bestimmten Schwelle für die am Bremspedal gemessene Betätigungsgeschwindigkeit unter Zuhilfenahme eines Elektromagnetantriebs (DE-A-42 34 041) oder bei Überschreitung einer bestimmten Schwelle für die am Bremspedal aufgebrachte Betätigungskraft unter Zuhilfenahme eines Federmechanismus (WO 95/01272) die innere Übersetzung eines Bremskraftverstärkers verändert wird.

Der Erfindung liegt die Aufgabe zugrunde, ausgehend vom gattungsbildenden Stand der Technik gemäß der DE-A-42 34 041 einer einfach aufgebauten Unterdruck-Bremskraftverstärker zu schaffen, der eine Verbesserung des Bremsvorgangs in kritischen Fahrsituationen ermöglicht.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 10.

Nach der Lehre der Erfindung hat ein gattungsgemäßer Unterdruck-Bremskraftverstärker ein zwischen dem Reaktionsglied und dem Steuerkolben angeordnetes Übersetzungsteil, das über den Steuerkolben gegen die elastische Kraft des Reaktionsglieds um mindestens einen vorbestimmten Relativweg bezüglich des Arbeitskolbens verlagerbar ist, wobei eine Koppeleinrichtung vorgesehen ist, die angepaßt ist, das Übersetzungsteil bei Überschreiten des vorbestimmten Relativwegs zwischen dem Übersetzungsteil und dem Arbeitskolben automatisch bezüglich des Arbeitskolbens festzulegen und somit das Reaktionsglied vom Steuerkolben abzukoppeln.

Somit ermöglicht die Nutzung der elastischen Eigenschaften des Reaktionsglieds eine gleichzeitige Umsetzung von zwei Steuerungsalternativen, nämlich eine von der Pedalkraft und eine von der Pedalgeschwindigkeit abhängige Änderung der Kennlinie des Unterdruck-Bremskraftverstärkers, mit ein und derselben Einrichtung. Dabei kann die zur Verformung des Reaktionsglieds um den benötigten Weg notwendige Pedalkraft bei langsamer Betätigung des Bremspedals über den Aussteuerpunkt des Unterdruck-Bremskraftverstärkers hinaus gegen die vom Hauptzylinder auf das Reaktionsglied zurückwirkende Reaktionskraft aufgebracht werden, während bei sehr schneller Betätigung des Bremspedals eine entsprechende Verformung des Reaktionsglieds aufgrund der Massenträgheiten der dem Reaktionsglied in Betätigungsrichtung des Steuerkolbens nachgelagerten Bauteile möglich ist.

Im Ergebnis wird in kritischen Fahrsituationen, die sich regelmäßig durch vom Fahrer überhöht oder zu schnell aufgebrachte Pedalkräfte auszeichnen, die vom Hauptzylinder auf das Reaktionsglied zurückwirkende Reaktionskraft nicht über den Steuerkolben des Unterdruck-Bremskraftverstärker zum Bremspedal zurückgeführt, so daß der Fahrer nicht zu einer Fehlreaktion infolge der Reaktionskraft verleitet werden kann. Insbesondere ist der in diesem Zusammenhang als für das Pedalgefühl besonders kritisch zu wertende Einsatz der Antiblockierregelung, bei der in rascher Abfolge der Bremsdruck auf- und wieder abgebaut wird, aufgrund der Abkopplung der Reaktionskraft vom Bremspedal nicht spürbar. Der Bremsdruck in der Hilfskraft-Bremsanlage wird nun abgesehen von den sehr geringen Kräften, die zur Betätigung der Ventilanordnung im Unterdruck-Bremskraftverstärker noch aufgebracht werden müssen, um hier Feder- und Reibkräfte zu überwinden, nur in Abhängigkeit vom Pedalweg über den Unterdruck-Bremskraftverstärker im Hauptzylinder erzeugt. Mit anderen Worten gesagt wird von einer Kraft-Weg-Steuerung des Unterdruck-Bremskraftverstärkers auf eine Weg-Steuerung des Unterdruck-Bremskraftverstärker umgeschaltet. Die maximale Verstärkung des Unterdruck-Bremskraftverstärkers kann dann mit sehr geringen Betätigungskräften erzielt werden, wobei sich in vorteilhafter Weise der Pedalweg wie im normalen Betrieb der Hilfskraft-Bremsanlage verhält, d.h. die dem Fahrer geläufige Korrelation zwischen Pedalweg und Bremsdruck identisch erhalten bleibt. Der somit vom Fahrer ohne große Kraftanstrengung eingesteuerte Bremsdruck wird vorzugsweise mittels einer Antiblockierregelung begrenzt, um ein dynamisch stabiles Verzögerungsverhalten des Kraftfahrzeugs zu gewährleisten.

Die Patentansprüche 2 bis 10 betreffen vorteilhafte Ausgestaltungen des erfindungsgemäßen Unterdruck-Bremskraftverstärkers, mit denen bei geringem baulichen Aufwand und lediglich kleinem Bauraumbedarf eine wenig störanfällige Funktion erzielt wird. So ist beispielsweise kein zusätzlicher Bauraum für die Koppeleinrichtung notwendig, wenn diese gemäß dem Patentanspruch 2 im Arbeitskolben aufgenommen ist.

Die Erfindung und weitere Vorteile der Erfindung werden nachstehend anhand eines bevorzugten Ausführungsbeispiels unter Bezugnahme auf die Zeichnung näher erläutert. Dabei zeigen:
Die Fig. 1 einen Ausschnitt aus einem Längsschnitt durch einen Unterdruck-Bremskraftverstärker gemäß einem bevorzugten Ausführungsbeispiel der Erfindung, mit einer Koppeleinrichtung zum Abkoppeln des Reaktionsglieds vom Steuerkolben, wobei die Koppeleinrichtung noch nicht aktiviert ist,
die Fig. 2 einen der Fig. 1 entsprechenden Ausschnitt, wobei die Koppeleinrichtung im aktivierten Zustand dargestellt ist,
die Fig. 3 das Detail X in Fig. 1, wobei die Koppeleinrichtung unmittelbar vor dem Umschalten von dem nicht aktivierten Zustand in den aktivierten Zustand dargestellt ist,
die Fig. 4A eine Draufsicht auf einen Schieber der Koppeleinrichtung entsprechend einer Ansicht von links in Fig. 1,
die Fig. 4B einen Schnitt durch den Schieber entlang der Linie Y-Y in Fig. 4A,
die Fig. 5A eine Draufsicht auf ein Federelement der Koppeleinrichtung entsprechend einer Ansicht von rechts in Fig. 1,
die Fig. 5B eine Seitenansicht des Federelements von links in Fig. 5A,
die Fig. 6 die Kennlinie des Unterdruck-Bremskraftverstärkers gemäß Fig. 1 als Verlauf des Bremsdrucks p über der Pedalkraft F in einer idealisierten Darstellung, wobei sich die Koppeleinrichtung in einem nicht aktivierten Zustand befindet,
die Fig. 7 eine der Fig. 6 entsprechende Kennlinie für einen Bremsvorgang mit moderater Pedalgeschwindigkeit, bei dem die Koppeleinrichtung aktiviert wird, und
die Fig. 8 eine der Fig. 6 entsprechende Kennlinie für einen Bremsvorgang mit hoher Pedalgeschwindigkeit, bei der ebenfalls die Koppeleinrichtung aktiviert wird.

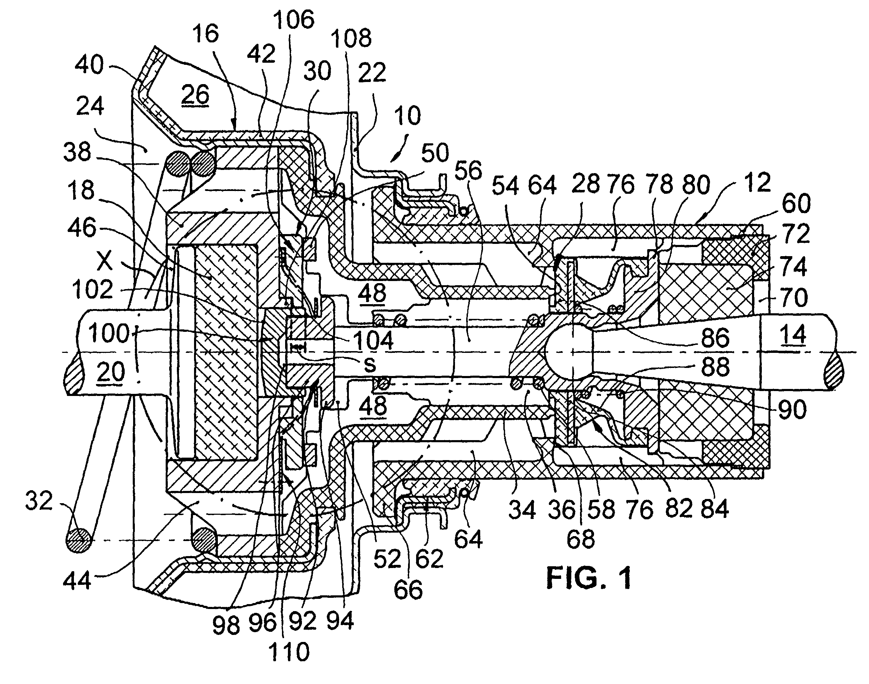

Die Fig. 1 zeigt einen ansprechweglosen Unterdruck-Bremskraftverstärker 10 einer Hilfskraft-Bremsanlage für Kraftfahrzeuge, der auf seiner in Fig. 1 linken Seite an einem Hauptzylinder in Einfach- oder Tandem-Bauweise und auf seiner in Fig. 1 rechten Seite an einem Bremspedal angeschlossen ist. Der in konventioneller Weise mit Radbremszylindern verbundene Hauptzylinder und das Bremspedal sind wie im Stand der Technik bekannt ausgebildet und aus Gründen der Übersichtlichkeit in den Figuren nicht dargestellt. Ebenso wurde auf eine vollständige Darstellung des Unterdruck-Bremskraftverstärkers 10 verzichtet, weil sich das dargestellte Ausführungsbeispiel konstruktiv nur in der Ausbildung der in Fig. 1 gezeigten Steuereinheit des Unterdruck-Bremskraftverstärkers 10 von herkömmlichen Unterdruck-Bremskraftverstärkern unterscheidet.

Der Unterdruck-Bremskraftverstärker 10 weist einen Steuerkolben 12 auf, der mittels einer Kolbenstange 14 an dem Bremspedal angeschlossen ist, und hat einen Arbeitskolben 16, der über ein elastisches Reaktionsglied in Form einer elastomeren Reaktionsscheibe 18 und einen Stößel 20 mit dem Hauptzylinder wirkverbunden ist. Der Arbeitskolben 16 trennt in einem Gehäuse 22 des Unterdruck-Bremskraftverstärkers 10 eine in Fig. 1 links vom Arbeitskolben 16 befindliche Unterdruckkammer 24 von einer in Fig. 1 rechts vom Arbeitskolben 16 befindlichen Arbeitskammer 26. Zwischen dem Steuerkolben 12 und dem Arbeitskolben 16 ist eine noch näher zu beschreibende Ventilanordnung 28 angeordnet, die über den Steuerkolben 12 in Abhängigkeit von der Pedalkraft und dem Pedalweg angesteuert werden kann, um die Arbeitskammer 26 wahlweise mit der Umgebung oder mit der Unterdruckkammer 24 zu verbinden und somit im Hauptzylinder einen bestimmten Bremsdruck zu erzeugen. Im Arbeitskolben 16 ist eine im folgenden noch ausführlich beschriebene Koppeleinrichtung 30 vorgesehen, die während eines Bremsvorgangs in einer kritischen Fahrsituation bei Überschreiten eines vorbestimmten Werts für die Pedalkraft bzw. für die Pedalgeschwindigkeit die Reaktionsscheibe 18 von dem Steuerkolben 12 abkoppelt und während eines normalen Bremsvorgangs nicht aktiviert ist, so daß entsprechend dem im Hauptzylinder erzeugten Bremsdruck vom Stößel 20 über die Reaktionsscheibe 18 eine am Bremspedal spürbare Reaktionskraft in den Steuerkolben 12 eingekoppelt wird.

Der mittels einer in der Unterdruckkammer 24 angeordneten Rückstellfeder 32 gegenüber dem Gehäuse 22 in Fig. 1 nach rechts vorgespannte Arbeitskolben 16 hat ein Steuergehäuse 34 aus Kunststoff, in dem ein gestuftes Durchgangsloch 36 ausgebildet ist. An der in Fig. 1 linken Stirnseite des Steuergehäuses 34 liegt ein Einsatz 38 an, der mittels eines Membrantellers 40 formschlüssig am Steuergehäuse 34 gehalten ist. Das Steuergehäuse 34, der Einsatz 38 und der Membranteller 40 bilden eine Einheit aus, die im Gehäuse 22 in Achsrichtung des Unterdruck-Bremskraftverstärkers 10 bewegbar ist. Am Außenumfang des Arbeitskolbens 16 liegt pneumatisch dicht eine elastische Membran 42 an, die an ihrem Außenumfang ebenfalls pneumatisch dicht am Gehäuse 22 befestigt ist (nicht dargestellt).

Der Einsatz 38 hat radial außen mehrere über den Umfang verteilte axiale Durchgangsbohrungen 44, die die Unterdruckkammer 24 mit dem Durchgangsloch 36 verbinden, und weist zentrisch eine in Achsrichtung des Unterdruck-Bremskraftverstärkers 10 durchgehende Stufenbohrung 46 auf, deren Abschnitt größeren Innendurchmessers die zylindrische Reaktionsscheibe 18 eng aufnimmt und das der Reaktionsscheibe 18 zugewandte Ende des Stößels 20 mit geringfügigem Spiel umgibt.

Der Arbeitskolben 16 ist weiterhin am Innenumfang des Durchgangslochs 36 im Steuergehäuse 34 mit mehreren Längsrippen 48 versehen, die an ihrer dem Einsatz 38 zugewandten Seite einen Stützring 50 für die Koppeleinrichtung 30 tragen, welche in einem von dem Steuergehäuse 34 und dem Einsatz 38 begrenzten Zwischenraum 52 im Arbeitskolben 16 angeordnet ist. Die in Fig. 1 rechte Stirnseite des Steuergehäuses 34 bildet schließlich einen ringförmigen ersten Ventilsitz 54 der Ventilanordnung 28 aus.

Der in Achsrichtung des Unterdruck-Bremskraftverstärkers 10 bewegbare Steuerkolben 12 hat ein an die Kolbenstange 14 angeschlossenes Druckstück 56, welches in das Durchgangsloch 36 im Steuergehäuse 34 des Arbeitskolbens 16 eintaucht. Das Druckstück 56 ist mittels einer am Außenumfang des Druckstücks 56 in dem Durchgangsloch 36 des Steuergehäuses 34 angeordneten Ventilfeder 58 der Ventilanordnung 28 gegenüber den Längsrippen 48 des Steuergehäuses 34 verspannt, die am Außenumfang des Druckstücks 56 geführt sind. Im Ergebnis beaufschlagt die Ventilfeder 58 den Steuerkolben 12 mit einer Kraft, die bestrebt ist, den Steuerkolben 12 vom Arbeitskolben 16 wegzudrücken.

Der Steuerkolben 12 weist ferner eine hohlzylindrische Hülse 60 aus Kunststoff auf, die an ihrem Außenumfang in einer am Gehäuse 22 vorgesehenen Dichtungsanordnung 62 pneumatisch dicht geführt ist und an ihrem in Fig. 1 linken Ende über mehrere am Innenumfang ausgebildete Längsrippen 64 das Steuergehäuse 34 des Arbeitskolbens 16 an dessen Außenumfang führt. Ein am in Fig. 1 linken Ende der Hülse 60 ausgebildeter Bund 66, der sich nach radial außen erstreckt, dient im Zusammenwirken mit der Dichtungsanordnung 62 als Anschlag gegen ein Herausziehen bzw. -drücken des Steuerkolbens 12 aus dem Gehäuse 22. Anschließend an die Längsrippen 64 hat die Hülse 60 im wesentlichen mittig eine vom Stößel 20 abgewandte Ringschulter, die einen zweiten Ventilsitz 68 der Ventilanordnung 28 ausbildet, der einen größeren Durchmesser hat als der erste Ventilsitz 54.

Auf der in Fig. 1 rechten Seite der Hülse 60 ist an deren Innenumfang ein mit einer in Achsrichtung des Unterdruck-Bremskraftverstärkers 10 durchgehenden Stufenbohrung 70 versehenes Endstück 72 aus Kunststoff befestigt. Im durchmessergrößeren Abschnitt der Stufenbohrung 70 ist ein Filter 74 angebracht, der eng an der durch die Stufenbohrung 70 hindurch geführten Kolbenstange 14 anliegt. Zwischen dem in Fig. 1 linken Ende des Endstücks 72 und den sich in Fig. 1 nach rechts an den zweiten Ventilsitz 68 anschließenden Längsrippen 76 der Hülse 60 ist ein Ringabschnitt 78 eines endseitigen Bunds 80 des Druckstücks 56 aufgenommen, so daß das Endstück 72 die Hülse 60 am Druckstück 56 formschlüssig festlegt. Im Ergebnis sind das Druckstück 56, die Hülse 60 und das mit dem Filter 74 versehene Endstück 72 über die Kolbenstange 14 als eine Einheit in Achsrichtung des Unterdruck-Bremskraftverstärkers 10 verschiebbar.

Die ein Doppelsitzventil ausbildende Ventilanordnung 28 hat ein in Achsrichtung des Unterdruck-Bremskraftverstärkers 10 zwischen dem Bund 80 des Druckstücks 56 und den Ventilsitzen 54, 68 angeordnetes elastisches Ventilteil 82, das mittels einer gelochten Scheibe 84 ausgesteift ist. Das Ventilteil 82 weist auf der den Ventilsitzen 54, 68 zugewandten Seite der Scheibe 84 einen mit den Ventilsitzen 54, 68 zusammenwirkenden Dichtabschnitt 86 auf und hat auf der gegenüberliegenden Seite der Scheibe 84 einen Balgabschnitt 88, der am Bund 80 des Druckstücks 56 unter Zuhilfenahme der Längsrippen 76 der Hülse 60 befestigt ist. Der Balgabschnitt 88 umgibt eine weitere am Außenumfang des Druckstücks 56 angeordnete Ventilfeder 90, die sich auf ihrer in Fig. 1 rechten Seite am Bund 80 des Druckstücks 56 abstützt und unter Anlage an der Scheibe 84 das Ventilteil 82 in Richtung der Ventilsitze 54, 68 vorspannt.

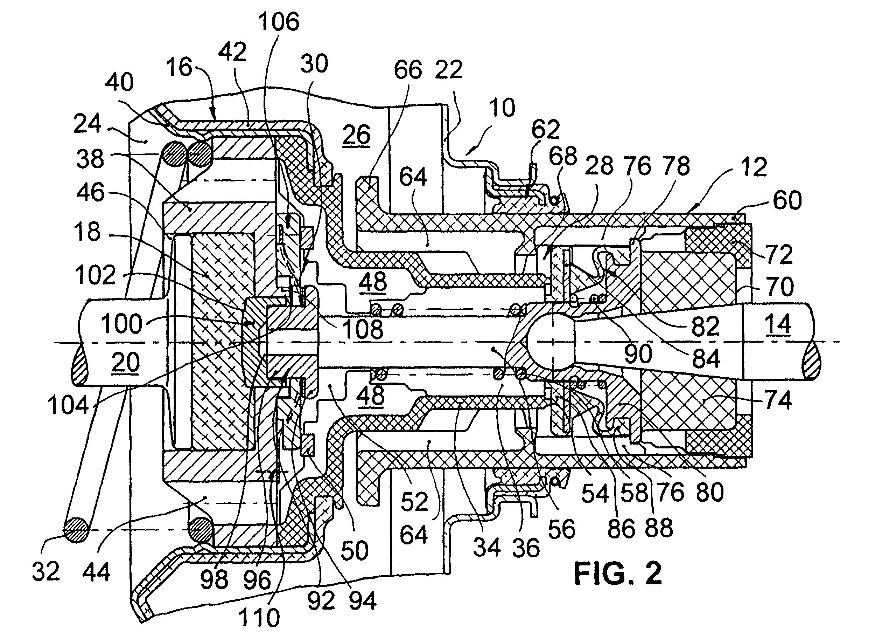

Liegt der Dichtabschnitt 86 des Ventilteils 82 am radial äußeren zweiten Ventilsitz 68 an, während er vom radial inneren ersten Ventilsitz 54 axial beabstandet ist, so ist die Unterdruckkammer 24 über die Durchgangsbohrungen 44 im Einsatz 38, den Zwischenraum 52, die durch die Längsrippen 48 des Steuergehäuses 34 ausgebildeten Kanäle, den Ringspalt zwischen dem ersten Ventilsitz 54 und dem Dichtabschnitt 86 des Ventilteils 82 und die durch die Längsrippen 64 der Hülse 60 ausgebildeten Kanäle mit der Arbeitskammer 26 verbunden. Liegt hingegen der Dichtabschnitt 86 des Ventilteils 82 wie in Fig. 2 dargestellt am ersten Ventilsitz 54 an, während er vom zweiten Ventilsitz 68 axial beabstandet ist, so ist die Arbeitskammer 26 über die durch die Längsrippen 64 der Hülse 60 ausgebildeten Kanäle, den Ringspalt zwischen dem zweiten Ventilsitz 68 und dem Dichtabschnitt 86 des Ventilteils 82, die durch die Längsrippen 76 der Hülse 60 ausgebildeten Kanäle und den Filter 74 in der Stufenbohrung 70 des Endstücks 72 mit der Umgebung verbunden. In der in Fig. 1 dargestellten Fahrstellung des Unterdruck-Bremskraftverstärkers 10 liegt der Dichtabschnitt 86 des Ventilteils 82 an beiden Ventilsitzen 54, 68 an, so daß die Ventilanordnung 28 die Unterdruckkammer 24 von der Arbeitskammer 26 und die Arbeitskammer 26 von der Umgebung trennt.

Auf der in Fig. 1 linken Seite des Druckstücks 56 ist eine im Zwischenraum 52 angeordnete Druckscheibe 92 befestigt, die einen an den Längsrippen 48 des Steuergehäuses 34 geführten Ringbund 94 und einen sich daran in Richtung der Reaktionsscheibe 18 anschließenden Führungsabschnitt 96 aufweist. Der Führungsabschnitt 96 taucht mit seinem in Fig. 1 linken Ende in ein Sackloch 98 eines Übersetzungsteils in Form einer Übersetzungsscheibe 100 ein, die in axialer Richtung des Unterdruck-Bremskraftverstärkers 10 zwischen der im Einsatz 38 des Arbeitskolbens 16 angebrachten Reaktionsscheibe 18 und dem Druckstück 56 des Steuerkolbens 12 angeordnet ist.

Die Übersetzungsscheibe 100 ist an ihrem zylindrischen Außenumfang in dem Abschnitt kleineren Durchmessers der Stufenbohrung 46 im Einsatz 38 und am Innenumfang des Sacklochs 98 an dem Führungsabschnitt 96 der Druckscheibe 92 in axialer Richtung des Unterdruck-Bremskraftverstärkers 10 beweglich geführt. Die der Reaktionsscheibe 18 zugewandte Stirnfläche 102 der Übersetzungsscheibe 100, die in der in Fig. 1 dargestellten Fahrstellung des Unterdruck-Bremskraftverstärkers 10 um einen geringen Betrag von der Reaktionsscheibe 18 beabstandet ist, hat eine nach außen gewölbte Form, während die Übersetzungsscheibe 100 auf der der Druckscheibe 92 zugewandten Seite mit einer ebenen Ringfläche 104 abschließt, über die, wie noch näher beschrieben wird, die Übersetzungsscheibe 100 mittels der Koppeleinrichtung 30 bezüglich des Arbeitskolbens 16 formschlüssig festgelegt werden kann.

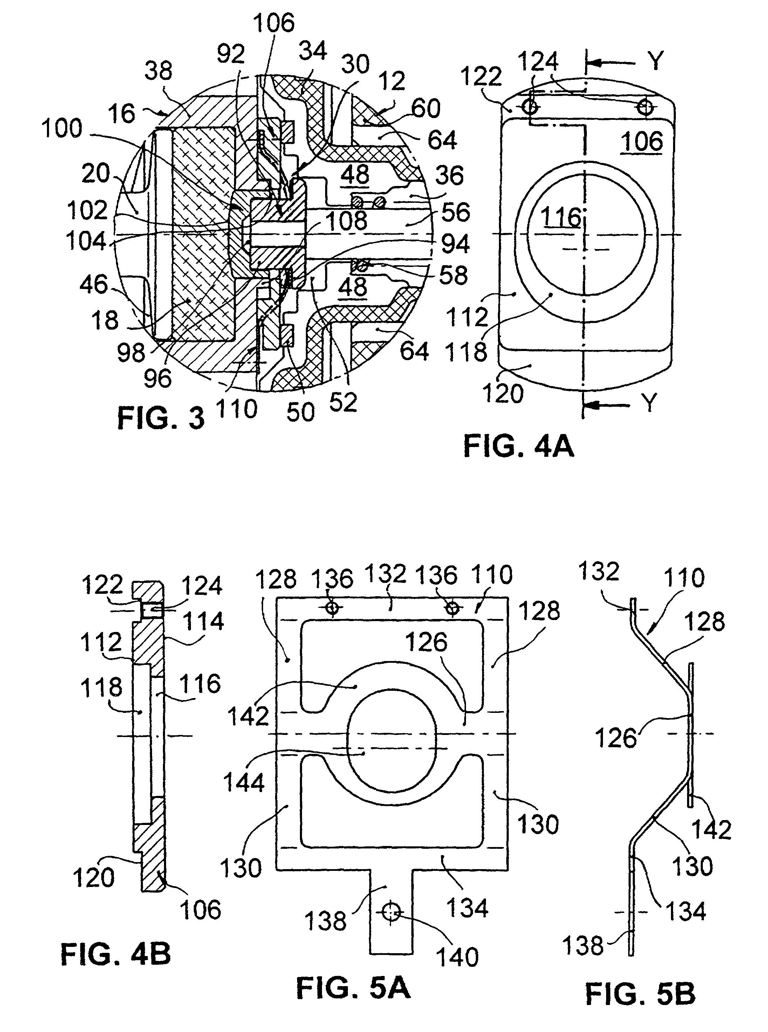

Die Koppeleinrichtung 30 weist einen senkrecht zur Längsachse des Arbeitskolbens 16 verschiebbaren Schieber 106 auf, der in den Fig. 4A und 4B alleine dargestellt ist. Für den zusammen mit dem Arbeitskolben 16 in Richtung der Längsachse des Unterdruck-Bremskraftverstärkers 10 bewegbaren Schieber 106 bilden die in Fig. 1 rechte Stirnfläche des Einsatzes 38 des Arbeitskolbens 16 und die in Fig. 1 linke Stirnfläche des Stützrings 50 am Steuergehäuse 34 des Arbeitskolbens 16 einen Führungsspalt aus. Dabei liegt der Schieber 106 am Einsatz 38 an, während er mittels des Stützrings 50 gegenüber dem Steuergehäuse 34 im wesentlichen spielfrei und somit geräuscharm abgestützt ist. Der Schieber 106 ist ferner in radialer Richtung des Einsatzes 38 an einem zur Stufenbohrung 46 konzentrischen, ringförmigen Vorsprung 108 des Einsatzes 38 geführt, wobei der Schieber 106 zwischen einer in den Fig. 1 und 3 dargestellten Ruhestellung, in der er eine Bewegung der Übersetzungsscheibe 100 relativ zum Arbeitskolben 16 in Richtung der Längsachse des Arbeitskolbens 16 gestattet, und einer in Fig. 2 dargestellten Koppelstellung verschiebbar ist, in der er die Übersetzungsscheibe 100 formschlüssig am Arbeitskolben 16 festlegt bzw. zwischen sich und der Reaktionsscheibe 18 einklemmt.

Zur Aufbringung einer in Querrichtung zum Arbeitskolben 16 wirkenden Betätigungskraft am Schieber 106 weist die Koppeleinrichtung 30 ferner ein mit dem Schieber 106 in Fig. 1 oben verbundenes Federelement 110 in Form einer Wellfeder auf, das in den Fig. 5A und 5B im unverformten Zustand dargestellt ist. Der Führungsabschnitt 96 der Druckscheibe 92 erstreckt sich durch das Federelement 110 hindurch, welches im Fig. 1 unteren Bereich am Einsatz 38 des Arbeitskolbens 16 befestigt ist. Das Federelement 110 kann im dargestellten Ausführungsbeispiel über den Ringbund 94 der Druckscheibe 92 am Druckstück 56, d.h. durch eine Relativbewegung zwischen dem Steuerkolben 12 und dem Arbeitskolben 16 vorgespannt werden. Alternativ dazu könnte das Federelement 110 auch mittels einer elektromagnetischen Betätigungseinrichtung (nicht dargestellt) vorgespannt werden.

Im Ergebnis hält das Federelement 110 in seinem nicht vorgespannten Zustand den Schieber 106 in seiner Ruhestellung (Fig. 1), während es unter Vorspannung (Fig. 3) den Schieber 106 in Richtung seiner Koppelstellung in Fig. 3 nach oben mit einer Kraft beaufschlagt. Diese Kraft verschiebt den Schieber 106 automatisch in seine Koppelstellung (Fig. 2), wenn die Übersetzungsscheibe 100 über die am Druckstück 56 des Steuerkolbens 12 befestigte Druckscheibe 92 gegen die elastische Kraft der Reaktionsscheibe 18 um einen Relativweg bezüglich des Arbeitskolbens 16 bewegt wurde, der größer ist als der Abstand s zwischen der dem Steuerkolben 12 zugewandten Ringfläche 104 der Übersetzungsscheibe 100 und der dem Steuerkolben 12 zugewandten Stirnfläche des ringförmigen Vorsprungs 108 am Einsatz 38 in der Fahrstellung des Unterdruck-Bremskraftverstärkers 10 gemäß Fig. 1. Dieser aufzubringende Relativweg s entspricht der Summe aus dem Abstand zwischen der Stirnfläche 102 der Übersetzungsscheibe 100 und der Reaktionsscheibe 18 in der Fahrstellung des Unterdruck-Bremskraftverstärkers 10 gemäß Fig. 1 und dem in Fig. 3 dargestellten Verformungsweg, den die Stirnfläche 102 in der Reaktionsscheibe 18 zurückgelegt hat, wenn der Schieber 106 in seine Koppelstellung verschoben wird.

Obgleich im dargestellten Ausführungsbeispiel zur Aufbringung einer in Querrichtung zum Arbeitskolben 16 wirkenden Betätigungskraft am Schieber 106 ein Federelement vorgesehen ist, könnte als Verriegelungselement für die Übersetzungsscheibe 100 auch ein elektromagnetisch betätigbarer Schieber (nicht dargestellt) zum Einsatz kommen, der bei Überschreiten eines vorbestimmten Werts für die Pedalkraft und/oder für die Pedalgeschwindigkeit die Übersetzungsscheibe 100 am Arbeitskolben 16 festlegt, um die Rückwirkung der Reaktionskraft auf das Bremspedal aufzuheben.

Gemäß den Fig. 4A und 4B ist der vorzugsweise metallische Schieber 106 der Koppeleinrichtung 30 als viereckige Platte mit zwei parallelen Deckflächen 112, 114 ausgebildet, durch die sich im wesentlichen mittig eine Durchgangsbohrung 116 erstreckt, deren Durchmesser geringfügig größer ist als der Außendurchmesser der Übersetzungsscheibe 100, so daß diese den Schieber 106 in seiner Ruhestellung zentrieren kann. Im eingebauten Zustand des Schiebers 106 erstreckt sich der Führungsabschnitt 96 der Druckscheibe 92 durch die Durchgangsbohrung 116 hindurch.

Ausgehend von der im eingebauten Zustand des Schiebers 106 dem Einsatz 38 zugewandten Deckfläche 112 hat der Schieber 106 eine unsymmetrisch zur Mittellinie der Durchgangsbohrung 116, in den Figuren etwas nach unten verschoben angeordnete Ausnehmung 118, die in der Draufsicht gemäß Fig. 4A von der Form her einem Langloch gleicht und die oben beschriebene Querbewegung des Schiebers 106 um seinen Sperrweg von der Ruhestellung in die Koppelstellung ermöglicht. Die Breite der Ausnehmung 118 bzw. deren in Fig. 4A obere und untere Endradien sind geringfügig größer als der Außendurchmesser des ringförmigen Vorsprungs 108 am Einsatz 38, der als Führungsabschnitt für den Schieber 106 im eingebauten Zustand des Schiebers 106 in der Ausnehmung 118 aufgenommen ist. Die am besten in Fig. 4B erkennbare Tiefe der Ausnehmung 118 ist etwas größer als der Betrag, um den der Vorsprung 108 von der in Fig. 1 rechten Stirnfläche des Einsatzes 38 vorsteht, so daß der Schieber 106 mit seiner Deckfläche 112 an der Stirnfläche des Einsatzes 38 anliegen kann, während er sich mit seiner Deckfläche 114 am Stützring 50 abstützt.

Weiterhin ist der Schieber 106 an der Deckfläche 112 in den Fig. 4A und 4B unten mit einer Aussparung 120 für das Federelement 110 versehen, während der Schieber 106 in der Deckfläche 112 oben eine Nut 122 für das Federelement 110 aufweist. Die Aussparung 120 und die Nut 122 erstrecken sich über die gesamte Breite des Schiebers 106. Ausgehend vom Grund der Nut 122 weist der Schieber 106 schließlich zwei voneinander beabstandete Durchgangsbohrungen 124 auf, die der Befestigung des Federelements 110 am Schieber 106 dienen.

In den Fig. 5A und 5B ist das vorzugsweise aus Federstahl bestehende Federelement 110 der Koppeleinrichtung 30 im unbelasteten Zustand näher dargestellt. Das Federelement 110 hat zu beiden Seiten, d.h. in den Fig. 5A und 5B nach oben und nach unten, ausgehend von einer mittleren Querstrebe 126 ein Paar parallel verlaufender, in der Seitenansicht vorzugsweiser gerader Blattfederschenkel 128, 130. Die von der Querstrebe 126 abgewandten Enden jedes Paars von Blattfederschenkeln 128, 130 sind über eine Endstrebe 132, 134 miteinander verbunden. Die Blattfederschenkel 128, 130 sind gegenüber der Querstrebe 126 und den Endstreben 132, 134 derart abgekröpft, daß die Endstreben 132, 134 in einer Ebene liegen, die parallel zu der Ebene verläuft, in der die Querstrebe 126 liegt.

Die in den Figuren obere Endstrebe 132 weist korrespondierend zu den Durchgangsbohrungen 124 im Schieber 106 Löcher 136 auf, die der Befestigung der Endstrebe 132 im Grund der Nut 122 dienen. Obgleich im dargestellten Ausführungsbeispiel der Schieber 106 und das Federelement 110 Durchgangsbohrungen 124 bzw. Löcher 136 zur Befestigung der Endstrebe 132 in der Nut 122 mittels beispielsweise Schrauben oder Nieten (nicht dargestellt) haben, ist es auch denkbar, die Endstrebe 132 lediglich formschlüssig in der Nut 122 festzulegen, wozu keine Bohrungen bzw. Löcher benötigt werden.

Die in den Figuren untere Endstrebe 134 ist mittig mit einem nach unten vorstehenden Lappen 138 versehen, der ein Loch 140 hat, über die das Federelement 110 mit seiner Endstrebe 134 an dem Einsatz 38 mittels beispielsweise einer Schraube oder einem Niet (nicht dargestellt) befestigt ist. Dabei stellt die Aussparung 120 des Schiebers 106 die für den Schrauben- bzw. Nietkopf benötigten Bauraum zur Verfügung. Hier ist auch eine Anordnung denkbar, gemäß der der Lappen 138 des Federelements 110 eine Abkröpfung (nicht dargestellt) aufweist, die formschlüssig in einer im Einsatz 38 ausgebildeten Vertiefung (nicht dargestellt) eingreift, da die Verbindung des Federelements 110 zum Einsatz 38 im vorgespannten Zustand des Federelements 110 im wesentlichen Kräften quer zur Längsachse des Arbeitskolbens 16 entgegenwirken muß.

Die mittlere Querstrebe 126 hat einen kreisförmigen Abschnitt 142, über dessen in Einbaulage dem Steuerkolben 12 zugewandte Stirnfläche durch den Ringbund 94 der Druckscheibe 92 die Vorspannkraft für das Federelement 110 eingeleitet werden kann. Der kreisförmige Abschnitt 142 ist mit einem sich parallel zu den Blattfederschenkeln 128, 130 erstreckenden Langloch 144 versehen, welches bezüglich der Symmetrielinie des Federelements 110 in den Figuren entsprechend der Ausnehmung 118 im Schieber 106 etwas nach unten versetzt ist. Die Breite des Langlochs 144 bzw. dessen in Fig. 5A obere und untere Endradien sind kleiner als der Außendurchmesser des Ringbunds 94 der Druckscheibe 92, aber größer als der Außendurchmesser des Führungsabschnitts 96 der Druckscheibe 92, so daß sich dieser durch das Federelement 110 hindurch erstrecken kann.

Es bleibt anzumerken, daß im eingebauten Zustand der Koppeleinrichtung 30 der Schieber 106 senkrecht zur Längsachse des Arbeitskolbens 16 zwischen den Blattfederschenkeln 128 und zwischen den Blattfederschenkeln 130 des Federelements 110 angeordnet ist. In Längsrichtung des Arbeitskolbens 16 befindet sich der Schieber 106 zwischen den Endstreben 132, 134 und der Querstrebe 126, wobei die Endstrebe 132 im Grund der Nut 122 liegt. Der Federweg des Federelements 110 ist dabei derart zu wählen, daß die Querstrebe 126 des Federelements 110 im vorgespannten Zustand des Federelements 110 (Fig. 3) von der Deckfläche 114 des Schiebers 106 noch beabstandet ist, während die Vorspannkraft bereits ausreicht, den Schieber 106 aus seiner Ruhestellung um seinen Sperrweg unter Längung des Federelements 110 in die Koppelstellung zu verschieben.

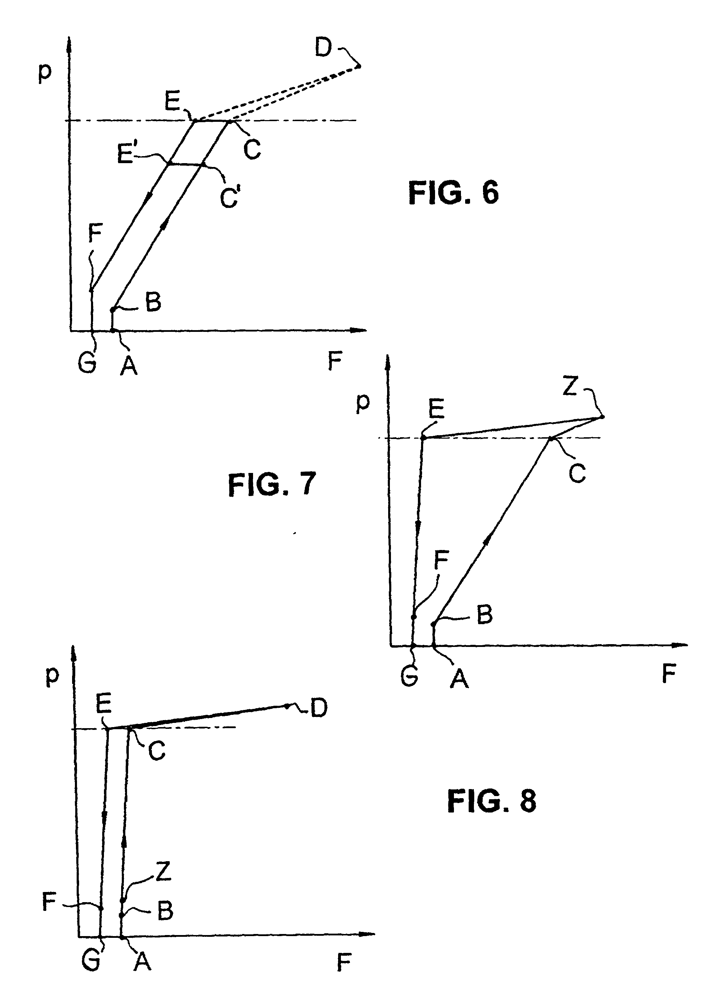

Im folgenden wird die Funktionsweise des unter Bezugnahme auf die Fig. 1 bis 5B beschriebenen Unterdruck-Bremskraftverstärkers 10 erläutert, wobei auch auf die Fig. 6 bis 8 Bezug genommen wird, in denen für einen normalen Bremsvorgang (Fig. 6), einen Bremsvorgang mit überhöhter Pedalkraft (Fig. 7) und einen Bremsvorgang mit überhöhter Pedalgeschwindigkeit (Fig. 8) die Kennlinien des Unterdruck-Bremskraftverstärkers 10 als Bremsdruck p über der Pedalkraft F aufgetragen sind. Vorab sei angemerkt, daß die dargestellten Kennlinien idealisiert und in Wirklichkeit insbesondere im Bereich der Knicke stark verrundet sind.

Wird auf das Bremspedal keine Kraft ausgeübt (Fahrstellung), so verschiebt die Rückstellfeder 32 ohne an die Unterdruckkammer 24 beispielsweise vom Saugrohr eines Ottomotors angelegtes Vakuum den Arbeitskolben 16 in Fig. 1 nach rechts. Der an dem Arbeitskolben 16 ausgebildete erste Ventilsitz 54 hebt dabei das Ventilteil 82 der Ventilanordnung 28 gegen die Kraft der Ventilfeder 90 vom zweiten Ventilsitz 68 am Steuerkolben 12 ab.

Wird nun ein Vakuum an die Unterdruckkammer 24 angelegt, baut sich zwischen der Unterdruckkammer 24 und der über die noch geöffnete Ventilanordnung 28 mit Atmosphärendruck verbundenen Arbeitskammer 26 eine Druckdifferenz auf. Diese Druckdifferenz übt über die Fläche des Membrantellers 40 eine Kraft aus. Sobald diese Kraft soweit angestiegen ist, daß die Vorspannkräfte der Rückstellfeder 32 und einer Feder im Hauptzylinder überwunden werden, bewegt sich der Membranteller 40 und damit das auf dem ersten Ventilsitz 54 aufliegende Ventilteil 82 nach links in Fig. 1. Diese Bewegung erfolgt so lange, bis das Ventilteil 82 am zweiten Ventilsitz 68 am Steuerkolben 12 zur Anlage kommt und somit die Arbeitskammer 26 von der Umgebung abtrennt. Der Unterdruck-Bremskraftverstärker 10 befindet sich jetzt in der in Fig. 1 gezeigten Grundstellung.

Der weiter sinkende Druck in der Unterdruckkammer 24 bewirkt, daß der erste Ventilsitz 54 vom Ventilteil 82 leicht abhebt und somit auch die Arbeitskammer 26 evakuiert wird. Dieser Vorgang dauert so lange, bis in der Unterdruckkammer 24 der volle vom Ottomotor gelieferte Unterdruck herrscht. Zwischen der Unterdruckkammer 24 und der Arbeitskammer 26 herrscht jetzt eine Druckdifferenz, die für das Verschieben des Membrantellers 40 in die Bereitschaftsstellung die notwendige Kraft liefert. Nun befindet sich der Unterdruck-Bremskraftverstärker 10 in der sogenannten Fahrstellung. Dieser Zustand entspricht den Punkten A in den Fig. 6 bis 8.

Bei Betätigung des Bremspedals wird der Steuerkolben 12 über die Kolbenstange 14 verschoben und der zweite Ventilsitz 68 hebt von dem Ventilteil 82 ab. Mit der in die Arbeitskammer 26 einströmenden Außenluft erhöht sich die Druckdifferenz am Arbeitskolben 16. Die Druckdifferenz bewirkt eine Kraft, die über die ringförmig auf dem Einsatz 38 des Arbeitskolbens 16 aufliegende Reaktionsscheibe 18 und den Stößel 20 auf den Hauptzylinder übertragen wird. Die Reaktionsscheibe 18 wird von links in Fig. 1 durch den Stößel 20 vollflächig und von rechts an der Auflage am Einsatz 38 ringförmig mit Druck beaufschlagt. Da die Reaktionsscheibe 18 aus einem elastomeren Werkstoff besteht und sich dadurch quasi hydraulisch verhält, kommt es zu einer Verformung. Ihr Volumen weicht zum Zentrum des Arbeitskolbens 16 hin in Richtung der Übersetzungsscheibe 100 aus, die über das Druckstück 56 in Richtung der Übersetzungsscheibe 100 geschoben wurde.

Die Punkte B in den Fig. 6 bis 8 repräsentieren den auch als Drucksprung bezeichneten Zustand, in dem die Stirnfläche 102 der Übersetzungsscheibe 100 vollflächig mit der Reaktionsscheibe 18 zur Anlage gelangt und die Servounterstützung des Unterdruck-Bremskraftverstärkers 10 einsetzt, wodurch die Kennlinie unter einer Neigung, die durch die Gesamtübersetzung des Unterdruck-Bremskraftverstärkers 10 und die Betätigungsgeschwindigkeit des Bremspedals bestimmt wird, weiter verläuft. Über die Anlage der Übersetzungsscheibe 100 an der Reaktionsscheibe 18 wird der über die Druckscheibe 92 an der Übersetzungsscheibe 100 anliegende Steuerkolben 12 relativ zum Steuergehäuse 34 verschoben, bis die Ventilanordnung 28 am zweiten Ventilsitz 68 wieder schließt. Es stellt sich ein Kräftegleichgewicht zwischen Stößel- und Rückstellkraft einerseits, und der auf den Arbeitskolben 16 wirkenden Servokraft sowie der über die Druckscheibe 92 wirkenden Eingangskraft andererseits ein. Durch kurze Öffnung des Ventilsitzes 68 hat sich in der Arbeitskammer 26 ein Mischdruck eingestellt. Der Bremsdruck p kann nun in Abhängigkeit von Pedalkraft und -weg zwischen B und C eingestellt werden, wobei das Ventilteil 82 bei konstanten Eingangsgrößen an den Ventilsitzen 54, 68 aufschwimmt. Durch C repräsentiert ist der Aussteuerpunkt des Unterdruck-Bremskraftverstärkers 10, oberhalb dem eine weitere Druckerhöhung nur noch über eine Steigerung der Pedalkraft F möglich ist. Wird beispielsweise bei C' die Pedalkraft F zurückgenommen, läuft der Bremsdruck p mit Hysterese über E' und F auf G zurück. Dabei schiebt die Rückstellfeder 32 den Arbeitskolben 16 in seine Grundstellung, während der Steuerkolben 12 durch die Ventilfeder 58 in Fig. 1 nach rechts verschoben wird, bis das Ventilteil 82 am Ventilsitz 68 zur Auflage kommt. Gleichzeitig hebt der Ventilsitz 54 vom Ventilteil 82 ab. Der Evakuiervorgang in der Arbeitskammer 26 beginnt. Bei F kommt die Übersetzungsscheibe 100 außer Eingriff von der Reaktionsscheibe 18. Im Ergebnis ist der Bremsdruck im Bereich B-C-E-F mit Servounterstützung einstellbar. In Fig. 6 gestrichelt dargestellt ist der Verlauf gemäß Stand der Technik, wenn über C hinaus eine Pedalkraft F bis beispielsweise D aufgebracht wird.

In den Fig. 7 und 8 sind Kennlinien dargestellt, bei denen im Punkt Z die Koppeleinrichtung 30 aktiviert wird, d.h. der Schieber 106 von der Ruhestellung (Fig. 1) nach Vorspannung des Federelements 110 (Fig. 3) und Überschreitung des Relativwegs s zwischen Steuerkolben 12 und Arbeitskolben 16 gegen die elastische Kraft der Reaktionsscheibe 18 in seine Koppelstellung (Fig. 2) überführt wurde, so daß die Reaktionskraft in den Arbeitskolben 16 umgeleitet wird und vom Bremspedal abgekoppelt ist.

Die Aktivierung der Koppeleinrichtung 30 erfolgt bei langsamer Pedalbetätigung (Fig. 7) erst knapp oberhalb von C, d.h. der Relativweg s kann hier gegen die elastische Kraft der Reaktionsscheibe 18 erst bei Aufbringung einer Kraft zurückgelegt werden, die größer ist als die zur Aussteuerung des Unterdruck-Bremskraftverstärkers 10 benötigte Kraft. Bei langsamer Pedalbetätigung läuft der Arbeitskolben 16 zwischen B und C quasi vor dem Steuerkolben 12 her, der Relativweg s wird hier nicht zurückgelegt.

Bei sehr schneller Pedalbetätigung (Fig. 8) kann der Arbeitskolben 16 infolge der langsamer einsetzenden Verstärkung und seiner Massenträgkeit nicht vor dem Steuerkolben 12 herlaufen, der Relativweg s zur Aktivierung der Koppeleinrichtung 30 wird gegen die elastische Kraft der Reaktionsscheibe 18 schnell zurückgelegt (nahe B).

Zu erwähnen ist noch, daß ausgehend von der Kennlinie gemäß Fig. 6 im Kennlinienabschnitt zwischen B und C die Koppeleinrichtung 30 an einem beliebigen Punkt durch Betätigung des Bremspedals mit einer vorbestimmten Betätigungskraft und/oder - geschwindigkeit aktiviert werden kann, so daß auch während eines normalen Bremsvorgangs infolge einer plötzlichen Panikreaktion des Fahrers, die sich durch ein Nachtreten oder Nachfassen am Bremspedal auszeichnet, die Koppeleinrichtung 30 aktiviert wird und infolgedessen Reaktionskräfte an das Bremspedal nicht mehr zurückgemeldet werden.

Bei aktivierter Koppeleinrichtung 30 kann nun der Bremsdruck p im Kennlinienbereich B-C-E-F mit einer Pedalkraft F zwischen G und A eingestellt werden, wobei eine geringe Pedalkraft F zum Halten bzw. Überwinden der Kräfte an der Ventilanordnung 28 notwendig ist, die wie oben beschrieben arbeitet. Nahe F deaktiviert sich die Koppeleinrichtung 30 selbsttätig, wobei der Schieber 106 von dem Federelement 110 aus seiner Koppelstellung in seine Ruhestellung zurückgezogen wird, da der Schieber 106 über die Reaktionsscheibe 18 und die Übersetzungsscheibe 100 von keiner Reaktionskraft mehr kraftschlüssig gegen den Stützring 50 verspannt ist.

Für den Fachmann ist ersichtlich, daß die beschriebene Koppeleinrichtung auch in einem Unterdruck-Bremskraftverstärker mit Ansprechweg vorgesehen werden kann. Dabei ist lediglich dafür Sorge zu tragen, daß der Steuerkolben nicht fest mit der Übersetzungsscheibe verbunden ist.

### Bezugszeichenliste

- 10: Unterdruck-Bremskraftverstärker
- 12: Steuerkolben
- 14: Kolbenstange
- 16: Arbeitskolben
- 18: Reaktionsscheibe
- 20: Stößel
- 22: Gehäuse
- 24: Unterdruckkammer
- 26: Arbeitskammer
- 28: Ventilanordnung
- 30: Koppeleinrichtung
- 32: Rückstellfeder
- 34: Steuergehäuse
- 36: Durchgangsloch
- 38: Einsatz
- 40: Membranteller
- 42: Membran
- 44: Durchgangsbohrung
- 46: Stufenbohrung
- 48: Längsrippe
- 50: Stützring
- 52: Zwischenraum
- 54: erster Ventilsitz
- 56: Druckstück
- 58: Ventilfeder
- 60: Hülse
- 62: Dichtungsanordnung
- 64: Längsrippe
- 66: Bund
- 68: zweiter Ventilsitz
- 70: Stufenbohrung
- 72: Endstück
- 74: Filter
- 76: Längsrippe
- 78: Ringabschnitt
- 80: Bund
- 82: Ventilteil
- 84: Scheibe
- 86: Dichtabschnitt
- 88: Balgabschnitt
- 90: Ventilfeder
- 92: Druckscheibe
- 94: Ringbund
- 96: Führungsabschnitt
- 98: Sackloch
- 100: Übersetzungsscheibe
- 102: Stirnfläche
- 104: Ringfläche
- 106: Schieber
- 108: Vorsprung
- 110: Federelement
- 112: Deckfläche
- 114: Deckfläche
- 116: Durchgangsbohrung
- 118: Ausnehmung
- 120: Aussparung
- 122: Nut
- 124: Durchgangsbohrung
- 126: Querstrebe
- 128: Blattfederschenkel
- 130: Blattfederschenkel
- 132: Endstrebe
- 134: Endstrebe
- 136: Loch
- 138: Lappen
- 140.: Loch
- 142: kreisförmiger Abschnitt
- 144: Langloch

- P: Bremsdruck
- F: Pedalkraft
- s: Relativweg

## Patentansprüche

1. Unterdruck-Bremskraftverstärker (10) mit einem an ein Bremspedal anschließbaren Steuerkolben (12), mittels dessen eine Ventilanordnung (28) in Abhängigkeit von der Pedalkraft (F) und dem Pedalweg ansteuerbar ist, um eine Arbeitskammer (26) wahlweise mit der Umgebung oder mit einer Unterdruckkammer (24) zu verbinden, die von der Arbeitskammer (26) durch einen zur Erzeugung eines Bremsdrucks (p) mit einem Hauptzylinder wirkverbindbaren Arbeitskolben (16) getrennt ist, wobei entsprechend dem im Hauptzylinder erzeugten Bremsdruck (p) eine am Bremspedal spürbare Reaktionskraft über ein am Arbeitskolben (16) angebrachtes elastisches Reaktionsglied (18) in den Steuerkolben (12) einkoppelbar ist, **dadurch gekennzeichnet, daß** zwischen dem Reaktionsglied (18) und dem Steuerkolben (12) ein Übersetzungsteil (100) angeordnet ist, das über den Steuerkolben (12) gegen die elastische Kraft des Reaktionsglieds (18) um mindestens einen vorbestimmten Relativweg (s) bezüglich des Arbeitskolbens (16) verlagerbar ist, wobei eine Koppeleinrichtung (30) vorgesehen ist, die angepaßt ist, das Übersetzungsteil (100) bei Überschreiten des vorbestimmten Relativwegs (s) zwischen dem Übersetzungsteil (100) und dem Arbeitskolben (16) automatisch bezüglich des Arbeitskolbens (16) festzulegen und somit das Reaktionsglied (18) vom Steuerkolben (12) abzukoppeln.

2. Unterdruck-Bremskraftverstärker (10) nach Anspruch 1, **dadurch gekennzeichnet, daß** der Arbeitskolben (16) einen das Reaktionsglied (18) aufnehmenden Einsatz (38) und ein Steuergehäuse (34) aufweist, wobei die Koppeleinrichtung (30) im Arbeitskolben (16) in einem Zwischenraum (52) zwischen dem Einsatz (38) und dem Steuergehäuse (34) angeordnet ist.

3. Unterdruck-Bremskraftverstärker (10) nach Anspruch 1 oder 2, **dadurch gekennzeichnet, daß** die Koppeleinrichtung (30) einen senkrecht zur Längsachse des Arbeitskolbens (16) bewegbaren Schieber (106) aufweist, der zwischen einer Ruhestellung, in der er eine Bewegung des Übersetzungsteils (100) in Richtung der Längsachse gestattet, und einer Koppelstellung verschiebbar ist, in der er das Übersetzungsteil (100) am Arbeitskolben (16) festlegt.

4. Unterdruck-Bremskraftverstärker (10) nach Anspruch 3, **dadurch gekennzeichnet, daß** der Schieber (106) in seiner Koppelstellung das Übersetzungsteil (100) formschlüssig am Arbeitskolben (16) festlegt.

5. Unterdruck-Bremskraftverstärker (10) nach Anspruch 3 oder 4, **dadurch gekennzeichnet, daß** der Schieber (106) am Einsatz (38) des Arbeitskolbens (16) anliegt und mittels eines am Steuergehäuse (34) angebrachten Stützrings (50) gegenüber dem Steuergehäuse (34) im wesentlichen spielfrei abgestützt ist.

6. Unterdruck-Bremskraftverstärker (10) nach einem der Ansprüche 3 bis 5, **dadurch gekennzeichnet, daß** der Schieber (106) als Platte mit zwei parallelen Deckflächen (112, 114) ausgebildet ist und eine Durchgangsbohrung (116) aufweist, durch die sich der Steuerkolben (12) hindurch erstreckt, wobei der Schieber (106) im Bereich der Durchgangsbohrung (116) eine von der dem Einsatz (38) des Arbeitskolbens (16) zugewandten Deckfläche (112) ausgehende Ausnehmung (118) aufweist, die der Führung des Schiebers (106) an einem Führungsabschnitt (108) des Arbeitskolbens (16) dient.

7. Unterdruck-Bremskraftverstärker (10) nach einem der Ansprüche 3 bis 6, **dadurch gekennzeichnet, daß** die Koppeleinrichtung (30) ein über den Steuerkolben (12) oder elektromagnetisch vorspannbares Federelement (110) aufweist, welches ohne Vorspannung den Schieber (106) in seiner Ruhestellung hält und unter Vorspannung den Schieber (106) in Richtung seiner Koppelstellung mit einer Kraft beaufschlagt.

8. Unterdruck-Bremskraftverstärker (10) nach Anspruch 7, **dadurch gekennzeichnet, daß** das Federelement (110) als Wellfeder ausgebildet ist und zu beiden Seiten einer mittleren Querstrebe (126) ein Paar parallel verlaufender Blattfederschenkel (128, 130) aufweist, wobei die Enden jedes Paars über eine Endstrebe (132, 134) miteinander verbunden sind.

9. Unterdruck-Bremskraftverstärker (10) nach Anspruch 8, **dadurch gekennzeichnet, daß** eine Endstrebe (132) des Federelements (110) in einer Nut (122) am Schieber (106) befestigt ist, während die andere Endstrebe (134) am Einsatz (38) des Arbeitskolbens (16) befestigt ist.

10. Unterdruck-Bremskraftverstärker (10) nach Anspruch 8 oder 9, **dadurch gekennzeichnet, daß** die mittlere Querstrebe (126) des Federelements (110) eine Öffnung (144) aufweist, durch die sich eine Druckscheibe (92) des Steuerkolbens (12) hindurch erstreckt, wobei die Druckscheibe (92) einen Ringbund (94) hat, über den eine Vorspannkraft in die mittlere Querstrebe (126) einleitbar ist.

## Claims

1. Vacuum brake servo (10) with a control piston (12) connectable to a brake pedal and by means of which a valve arrangement (28) can be controlled as a function of the pedal force (F) and the pedal path, in order to connect, as desired, a working chamber (26) with the environment or with a vacuum chamber (24), which is separated from the working chamber (26) by a working piston (16) work-connectable with a master cylinder for producing a brake pressure (p) and corresponding to the brake pressure (p) produced in the master cylinder a reaction force detectable at the brake pedal can be coupled into the control piston (12) by means of an elastic reaction member (18) fitted to the working piston (16), **characterized in that** between the reaction member (18) and the control piston (12) is located a transmission part, which by means of the control piston (12) is displaceable against the elastic force of the reaction member (18) by at least one predetermined relative path (s) with respect to the working piston (16), a coupling device (30) being provided, which is adapted to automatically fix the transmission part (100) relative to the working piston (16) on exceeding the predetermined relative path (s) between the transmission part (100) and the working piston (16) and consequently disconnect the reaction member (18) from the control piston (12).

2. Vacuum brake servo (10) according to claim 1, **characterized in that** the working piston (16) has an insert (38) receiving the reaction member (18) and a control box (34), the coupling device (30) in the working piston (16) being placed in a gap (52) between the insert (38) and the control box (34).

3. Vacuum brake servo (10) according to claim 1 or 2, **characterized in that** the coupling device (30) has a slide (106) movable perpendicularly relative to the longitudinal axis of the working piston (16) and which can be moved between a neutral position, where it allows a movement of the transmission part (100) in the direction of the longitudinal axis, and a coupling position, in which it fixes the transmission part (100) on the working piston (16).

4. Vacuum brake servo (10) according to claim 3, **characterized in that** in its coupling position the slide (106) fixes the transmission part (100) positively to the working piston (16).

5. Vacuum brake servo (10) according to claim 3 or 4, **characterized in that** the slide (106) engages on the insert (38) of the working piston (16) and by means of a thrust ring (50) fitted to the control box (34) is supported in substantially zero-backlash manner relative to said control box (34).

6. Vacuum brake servo (10) according to one of the claims 3 to 5, **characterized in that** the slide (106) is constructed as a plate with two parallel top surfaces (112, 114) and has a through hole (116) through which extends the control piston (12), the slide (106) having in the vicinity of the through hole (116) a recess (118) emanating from the top surface (112) facing the insert (38) of the working piston (16) and which is used for guiding the slide (106) on a guide section (108) of the working piston (16).

7. Vacuum brake servo (10) according to one of the claims 3 to 6, **characterized in that** the coupling device (30) has a spring element (110) pretensionable electromagnetically or by means of the control piston (12) and which, without pretension, keeps the slide (106) in its neutral position and under pretension forces the slide (106) in the direction of its coupling position.

8. Vacuum brake servo (10) according to claim 7, **characterized in that** the spring element (110) is constructed in corrugated spring form and has on either side of a central cross strut (126) a pair of parallel leaf spring legs (128, 130), the ends of each pair being interconnected by means of an end strut (132, 134).

9. Vacuum brake servo (10) according to claim 8, **characterized in that** an end strut (132) of the spring element (110) is fixed in a groove (122) on the slide (106), whereas the other end strut (134) is fixed on the insert (38) of the working piston (16).

10. Vacuum brake servo (10) according to claim 8 or 9, **characterized in that** the central cross strut (126) of the spring element (110) has an opening (144) through which extends a thrust washer (92) of the control piston (12), the thrust washer (92) having a collar (94) by means of which a pretensioning force can be introduced into the central cross strut (126).

## Revendications

1. Servofrein à dépression (10) comportant un piston de commande (12) apte à être raccordé à une pédale de frein et à l'aide duquel un dispositif de soupape (28) est apte à être commandé en fonction de la force de pédale (F) et de la course de pédale pour relier sélectivement une chambre de travail (26) à l'environnement ou à une chambre à dépression (24) qui est séparée de la chambre de travail (26) par un piston moteur (16) apte à être en relation fonctionnelle avec un maître-cylindre pour produire une pression de freinage (p), étant précisé que suivant la pression de freinage (p) produite dans le maître-cylindre, une force de réaction sensible au niveau de la pédale de frein peut être introduite dans le piston de commande (12) par l'intermédiaire d'un organe de réaction élastique (18) monté sur le piston moteur (16), **caractérisé en ce qu'**il est prévu, entre l'organe de réaction (18) et le piston de commande (12), un élément de démultiplication (100) qui est apte à être déplacé à l'encontre de la force élastique de l'organe de réaction (18) suivant au moins une course relative prédéfinie (s) par rapport au piston moteur (16), par l'intermédiaire du piston de commande (12), étant précisé qu'il est prévu un dispositif d'accouplement (30) qui est apte à immobiliser automatiquement l'élément de démultiplication (100) par rapport au piston moteur (16) au cas où la .course relative prédéfinie (s) entre ledit élément de démultiplication (100) et le piston moteur (16) est dépassée, et à désaccoupler ainsi l'organe de réaction (18) et le piston de commande (12).

2. Servofrein à dépression (10) selon la revendication 1, **caractérisé en ce que** le piston moteur (16) comporte un insert (38) qui reçoit l'organe de réaction (18), et un carter de commande (34), le dispositif d'accouplement (30) étant disposé dans le piston moteur (16) dans un espace intermédiaire (52) entre l'insert (38) et le carter de commande (34).

3. Servofrein à dépression (10) selon la revendication 1 ou 2, **caractérisé en ce que** le dispositif d'accouplement (30) comporte un coulisseau (106) mobile, perpendiculairement à l'axe longitudinal du piston moteur (16), entre une position de repos dans laquelle il autorise un déplacement de l'élément de démultiplication (100) dans le sens de l'axe longitudinal, et une position d'accouplement dans laquelle il immobilise l'élément de démultiplication (100) contre le piston moteur (16).

4. Servofrein à dépression (10) selon la revendication 3, **caractérisé en ce que** le coulisseau (106), dans sa position d'accouplement, immobilise l'élément de démultiplication (100) par complémentarité de forme contre le piston moteur (16).

5. Servofrein à dépression (10) selon la revendication 3 ou 4, **caractérisé en ce que** le coulisseau (106) est appliqué contre l'insert (38) du piston moteur (16) et est en appui pratiquement sans jeu par rapport au carter de commande (34) grâce à une bague d'appui (50) montée sur ledit carter (34).

6. Servofrein à dépression (10) selon l'une des revendications 3 à 5, **caractérisé en ce que** le coulisseau (106) est conçu comme une plaque avec deux surfaces de recouvrement parallèles (112, 114) et présente un perçage de passage (116) à travers lequel s'étend le piston de commande (12), le coulisseau (106) comportant dans la zone dudit perçage de passage (116) un creux (118) qui part de la surface de recouvrement (112) tournée vers l'insert (38) du piston moteur (16) et qui sert à guider le coulisseau (106) au niveau d'une section de guidage (108) du piston moteur (16).

7. Servofrein à dépression (10) selon l'une des revendications 3 à 6, **caractérisé en ce que** le dispositif d'accouplement (30) comporte un élément formant ressort (110) qui est apte à subir une contrainte préliminaire par l'intermédiaire du piston de commande (12) ou par voie électromagnétique et qui, sans contrainte préliminaire, maintient le coulisseau (106) en position de repos tandis qu'avec une contrainte préliminaire, il exerce une force sur le coulisseau (106) dans le sens de sa position d'accouplement.

8. Servofrein à dépression (10) selon la revendication 7, **caractérisé en ce que** l'élément formant ressort (110) est conçu comme un ressort ondulé et présente, des deux côtés d'une branche transversale centrale (126), une paire de branches de ressort à lame parallèles (128, 130), les extrémités de chaque paire étant reliées par une branche d'extrémité (132, 134).

9. Servofrein à dépression (10) selon la revendication 8, **caractérisé en ce qu'**une branche d'extrémité (132) de l'élément formant ressort (110) est fixé au coulisseau (106) dans une rainure (122) tandis que l'autre branche d'extrémité (134) est fixée à l'insert (38) du piston moteur (16).

10. Servofrein à dépression (10) selon la revendication 8 ou 9, **caractérisé en ce que** la branche transversale centrale (126) de l'élément formant ressort (110) présente une ouverture (144) à travers laquelle s'étend un disque de pression (92) du piston de commande (12), le disque de pression (92) ayant une collerette annulaire (94) par l'intermédiaire de laquelle une force de contrainte préliminaire peut être introduite dans la branche transversale centrale (126).
